Europäisches Patentamt

European Patent Office

Office européen des brevets

(19)

(11) Publication number: 0 081 322

A2

(12) **EUROPEAN PATENT APPLICATION**

(21) Application number: 82306292.2

(22) Date of filing: 25.11.82

(51) Int. Cl.³: G 06 K 9/46

(30) Priority: 04.12.81 GB 8136638

(43) Date of publication of application:
15.06.83 Bulletin 83/24

(84) Designated Contracting States:
AT BE CH DE FR IT LI NL SE

(71) Applicant: BRITISH ROBOTIC SYSTEMS LIMITED
9-11 Grosvenor Gardens
London SW1W 0BG(GB)

(72) Inventor: Mott, David Hugh
37 Michael Road
London E11(GB)

(72) Inventor: Page, Graham John
1 Cranbrook Road
East Barnet Hertfordshire EN4 8UN(GB)

(72) Inventor: Upcott, David Normann
44 Cottimore Lane
Walton-on-Thames Surrey(GB)

(74) Representative: Davis, Norman Norbridge
Patent Department National Research Development
Corporation 101 Newington Causeway
London SE1 6BU(GB)

(54) Component identification systems.

(57) A component 2 to be identified is placed on a rotating
turntable 1. An electronic line scan camera 4 is directed onto
turntable 1 and scans along radial lines to obtain a digitised
video signal having a multiplicity of levels. The lighting
contrast may be enhanced by suitably positioned lighting 3.
Points on each radial line at a predetermined radius are
selected to generate an identification signal for the compo-
nent which is compared with a database of such signals held
in a store. When a match is obtained the component is
identified. There may be a relatively coarse initial scan
covering a full 360° rotation and finally the turntable can be
positioned to orientate component 2 at a required position to
enable it to be picked up by an arm 8 of a robot 7.

Fig. 1

Croydon Printing Company Ltd.

122314

## COMPONENT INDENTIFICATION SYSTEMS

This invention relates to component identification systems. It has application in systems, which having identified a component, then place it in a predetermined orientation.

Component identification systems utilise sensing devices to detect signals from different parts of a component and then compare the detected signals with stored signals held in a database. When a match is obtained information held in the database relating to that component is provided. Additionally once a component is identified it is possible to use the stored information to control an orientation device to place the component in a predetermined position.

It is an object of the invention to provide an identification system in which a high degree of discrimination between different components can be achieved.

According to the invention a component identification system comprises:-

an electronic line scan camera;

line scan enabling means for enabling the camera to effect a plurality of line scans over the surface of a component to be identified to provide a video signal of light reflected from the surface of the component;

means for selecting a path across the component made up of a sequence of points from different ones of the scan lines and generating an identification signal comprising those elements of the video signal which represent the said-points;

digital storage means for a database of a plurality of identification signals;

comparison means for comparing the identification signal of a component obtained from a video signal with the database to obtain a match;   and

means for indicating when a match has been obtained.

Preferably the database also includes video signals of the line scans of components in addition to the said identification signals and the said comparison means includes means for comparing the video signal obtained by the camera with the stored video signals held in the database to obtain a match. It is preferred that the comparison means functions firstly to compare video signals and then to compare identification signals.

In carrying out the invention the video signals stored in the database may comprise digital signals representing a multiplicity of different light levels reflected from a component. It is convenient to provide one or more light sources which are positioned to direct light onto a component to enhance the contrast of light reflected from different parts of the surface thereof.

Means may be provided for effecting relative movement between the camera and the component to enable the camera to scan a sequence of lines over the surface of the component. In one preferred embodiment of the invention the said means for effecting relative movement comprises a turntable on which the component is placed and drive means for rotating the turntable. Conveniently the drive means comprises a stepper motor or other drive device which enables the turntable to be positioned with a high degree of angular accuracy. The camera and the light source are directed onto the turntable and scanning is effected by rotating the turntable by successive angular amounts and carrying out a radial line scan during each rotation. With such an arrangement the path across the component defining the identification signal comprises a circumferential line the radius of which is chosen so that the line lies across significant features of the component.

Control means can also be provided for operating the drive means so as to place the component in a predetermined position after a match has been obtained. This enables the component to be picked up by a robot arm, for example.

In order to build up the database the system can be operated in a teaching mode in which a component is placed on the turntable and video signals obtained from the scanning of its surface are stored in the database together with information relating to the component which is entered by the operator.

To assist in a more accurate orientation of a component both a coarse scan and a fine scan may be carried out. In the coarse scan the turntable is stepped round the full $360^{\circ}$ and after each stepping angle a line scan is effected. This information is sufficient to obtain a match in the database. The turntable is then rotated to a preselected sector the position of which is calculated by reference to the identification signals. In this sector the component is subjected to a fine scan to obtain fine detail from the component and confirm the match. The final position of the turntable is then calculated by reference to the fine scan information. For an equal number of angular steps in the coarse and fine scans respectively the accuracy of the final orientation is improved by the ratio of $360^{\circ}$ to the fine scan sector angle. Typically the coarse scan is carried out every $3^{\circ}$ while the fine scan angle as a $30^{\circ}$ sector angle and a scan is taken over every $\frac{1}{4}^{\circ}$ in this sector. The accuracy of the final placing of the component is thus to within $\frac{1}{2}^{\circ}$ without the need to carry out a line scan every $\frac{1}{4}^{\circ}$ over a full circle.

In order that the invention may be more fully understood reference will now be made to the accompanying drawings in which:-

Figure 1 is a block diagram of the system,

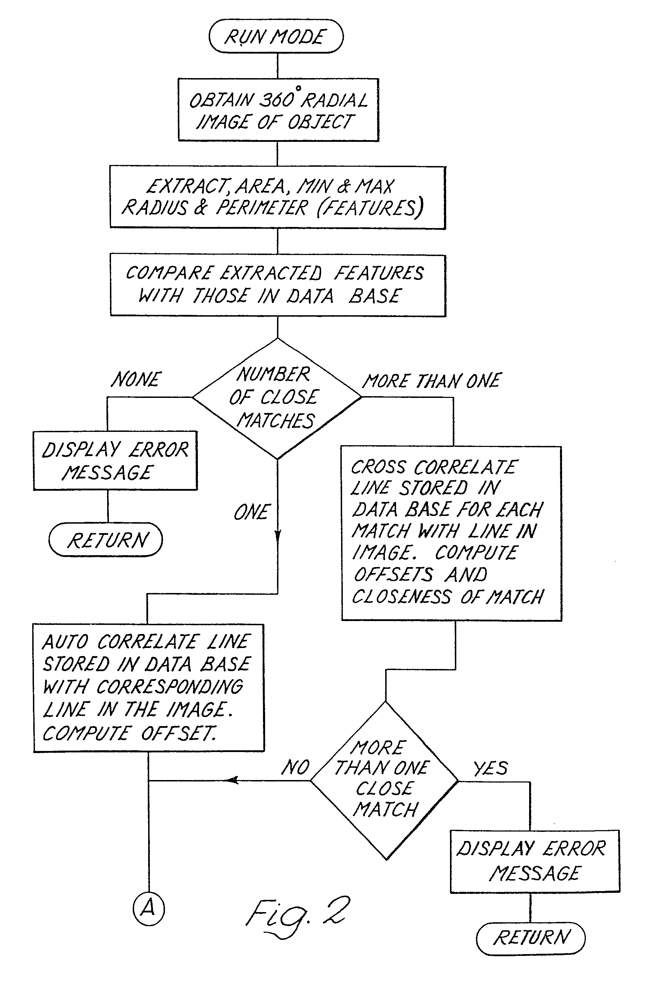

Figure 2 and Figure 3 together are a flowchart of the run mode, and

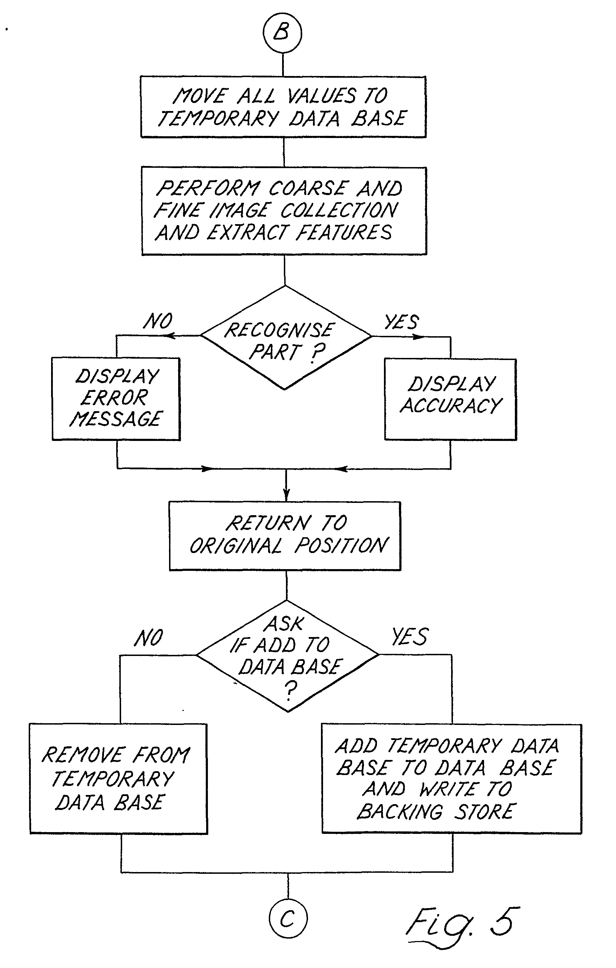

Figure 4 and Figure 5 together are a flowchart of the teach mode.

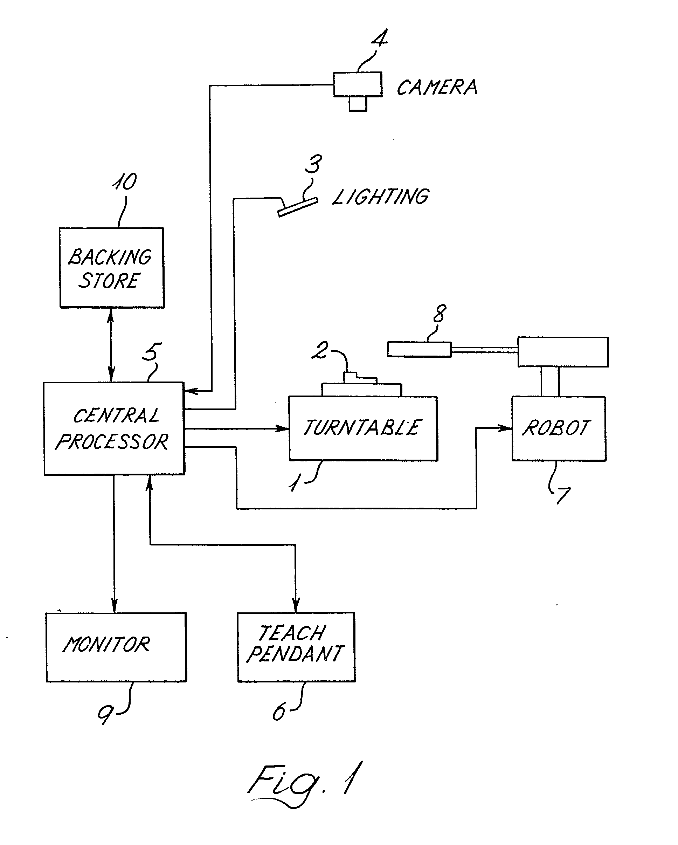

Referring now to Figure 1 there is shown therein a component identification and orientation system which comprises a horizontal turntable 1 driven by a stepper motor. A component 2 to be identified is placed on turntable 1. Above table 1 there are positioned lighting sources 3 which direct light on to the component at an angle. The angles are chosen to optimise the contrast between light reflected from different parts of the component and also to cast strong shadows from any projecting parts of the component. A camera 4 is positioned vertically above table 1. The drive motor for turntable 1 is controlled from a central processor 5 which also sends command signals to camera 4 to effect line scans and receives signals from camera 4 arising from its scanning action. A backing store 10 for processor 5 holds a database. Backing store 10 may be of any suitable kind. A hand-held teach pendant 6 is provided to enable an operator to feed information into central processor 5 when the system is in a teach mode.

A robot 7 is positioned near turntable 1 and robot 7 has an arm 8 for picking up component 2 when the turntable has been orientated to the desired position. A monitor 9 displays a picture of a component based on signals stored in processor 5, either in its database or else currently being viewed by the camera.

The operation of the system shown in Figure 1 will now be described. A component 2 is placed on turntable 1 with a reasonable positional accuracy but in a random angular orientation about the vertical axis of the turntable. An image of component 2 is obtained by successive angular steppings of the turntable around a full circle. At each stepping a radial line scan of the component is obtained by camera 4 and the signal obtained is fed to central processor 5. The stepping angle may be $3^o$ in one embodiment, thus giving 120 scanning lines.

The video signal obtained from camera 4 comprises a sequence of line scans in each of which there will be a side variation of amplitude in the signal depending on the instantaneous amplitude of the light from source 3 reflected from different points of component 2. These amplitudes will depend on the nature and position of the reflecting surfaces of component 2. These amplitudes are converted to digital values and it is an important feature of the invention that provision is made for a multiplicity of different levels. In one embodiment of the invention 256 different light levels are provided for in digitising the video signal but a greater or lesser number of levels can be provided if desired. By providing for such a multiplicity of different levels a considerable amount of detail relating to component 2 can be recorded and such detail gives very much more information than a simple two level (i.e. black or white) signal which gives only the silhouette of an object on the turntable.

From the video signal that is obtained by radial line scans of the component 2 lying on turntable 1 certain features are extracted. These features may for example comprise the area of the component, the minimum and maximum radius of the component and the length of its perimeter. These features are then compared with the corresponding features for components already stored in a database associated with central processor 5 or its backing tape unit 10. Various conclusions can arise from the comparison step. These are that there is no match, that there are several possible matches or that there is only one close match. If no match is obtained then an error signal is displayed. If more than one match is obtained then steps are taken to narrow the matches down to one. If only one match is obtained then this is confirmed in a further step.

For the additional step an identification signal is produced from the video signal comprising a sequence of signals taken from points in each radial line scan which lie on a preselected circle. Where there is more than one possible match this identification signal is compared in a cross-correlation operation with the corresponding identification signals associated with the possible matches that are already stored in the database. The cross-correlation operation should eliminate all possible matches except one. If only one match was obtained then an auto-correlation step is carried out with the identification signal of the match held in the database to confirm the match.

When a single close match is achieved with a component of which particulars are held in the database identification data, such as its part number, are displayed on monitor 9. In addition the display can include a picture of the component. A calculation is carried out to obtain an offset angle being the angle by which turntable 1 must be rotated to a preselected position defining the commencement of a small sector. This sector can conveniently have a $30^{\circ}$ sector angle.

The turntable is now stepped through the selected sector in a fine scan operation. In place of the $3^{\circ}$ stepping of the previous coarse scan a $\frac{1}{4}^{\circ}$ stepping angle is now used and information relating to the selected circumferential line is extracted and auto-correlated with the corresponding line for the selected component stored in the database.

From this operation a final offset angle accurate to a $\frac{1}{2}^O$ is calculated and the turntable is then rotated through this angle to complete the placing of the component in the desired position.

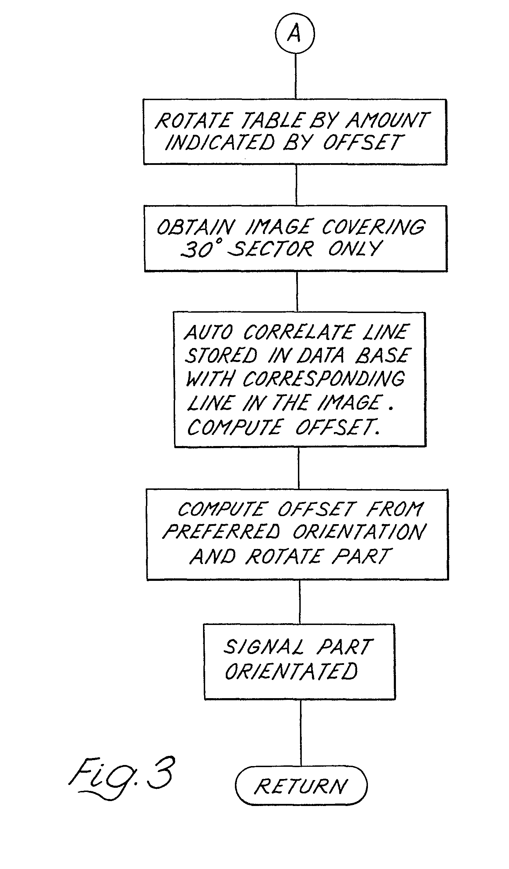

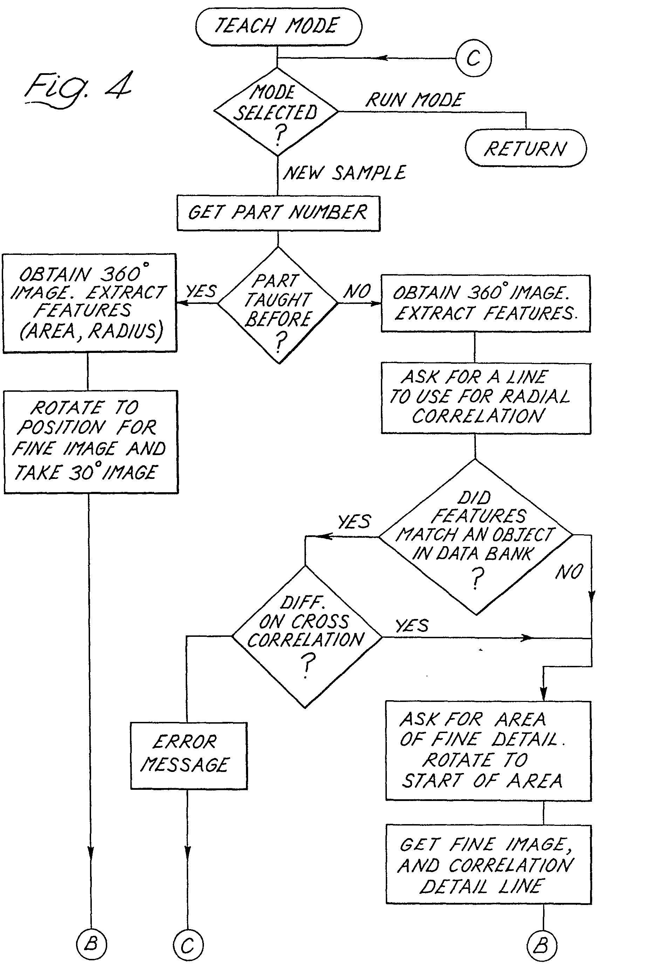

The operation that has been described above is termed the 'run mode'. It assumes that there is already a database available in central processor 5 containing information relating to one or more components. A flowchart of the run mode is set out in Figure and 3. In order to enter information relating to components into the database a 'teach mode' is provided. A flowchart of the teach mode is set out in Figures 3 and 4. In this mode the teach penda is used and the new component is placed on the turntable and information relating to its identification, for example its part number, is entered through the teach pendant. The turntable is then driven through a full circle in $3^O$ steps to effect a coarse scan and when this is completed a reconstructed image of the component is displayed in monitor 9. The operator then selects a radius to define the circumferential line to be used for further identification and the signals at the points on the successive radial line which define this circumferential line are then store The operator then identifies the sector at which the fine scan is to commence and a fine scan is then carried out.

Provision may also be made for carrying out a further operation in the teaching mode on a sample which is already stor The information so obtained is statistically combined with the information relating to that part already in the database to account for variations in different samples of the same componen

The system is described above with reference to one turntab being controlled from central processor 5. However more than on turntable with associated camera and lighting may be provided ea controlled from a single processor.

## CLAIMS

1.  A component identification system comprising:-

an electronic line scan camera;

line scan enabling means for enabling the camera to effect a plurality of line scans over the surface of a component to be identified to provide a video signal of light reflected from the surface of the component;

means for selecting a path across the component comprising a sequence of points from different ones of the scan lines and generating an identification signal comprising those elements of the video signal which represent the said points;

digital storage means for a database of a plurality of identification signals;

comparison means for comparing the identification signal of a component obtained from a video signal with the database to obtain a match;   and

means for indicating when a match has been obtained.

2.  The system as claimed in Claim 1 in which said line scan enabling means comprises means for effecting relative movement between the camera and a component.

3.  The system as claimed in Claim 2 in which the said means for effecting relative movement comprises a turntable for supporting a component and drive means for rotating the turntable about a central axis.

4.  The system as claimed in Claim 2 in which the drive means comprises a stepper motor.

5.  The system as claimed in Claim 3 or Claim 4 in which the camera is arranged to scan lines extending radially of the turntable from its axis of rotation.

6.  The system as claimed in Claim 5 in which the means for selecting a path comprises means for selecting a sequence of points lying on different radial scan lines all at an equal distance from the axis of rotation whereby the resulting identification signal follows a circumferential line.

7. Apparatus as claimed in any one of Claims 3 to Claim 6 in which the drive means carries out both a coarse scan and a fine scan.

8. The system as claimed in Claim 7 in which the number of radial line scans is equal in both the coarse and the fine scan.

9. The system as claimed in Claim 7 or Claim 8 in which the angle of rotation in carrying out the coarse scan is $360^{o}$.

10. The system as claimed in any one of the preceding claims in which the database also includes other features of the video signals of the line scans of components and said comparison means functions to compare the corresponding other features of said video signal with the database to obtain a match.

11. The system as claimed in Claim 10 in which the comparison means functions to firstly compare the said other features and then to compare the identification signals.

12. The system as claimed in Claim 10 or Claim 11 in which said other features comprise one or more of the area of the component, its maximum and minimum radius and its perimeter length.

13. The system as claimed in any one of the preceding claims in which the signals stored in the database are digital signals representing a multiplicity of different light levels reflected from a component being identified.

14. The system as claimed in any one of the preceding claims and including one or more light sources positioned to enhance the contrast of light reflected from different parts of the surface of a component.

15. The system as claimed in any one of the preceding claims in which control means is provided for operating the drive means so as to place the component in a predetermined position after a match has been obtained.

NF301/0134E

0081322

Fig. 1

0081322

```
                    ( RUN MODE )
                         │
                         ▼
            ┌────────────────────────┐
            │ OBTAIN 360° RADIAL     │
            │ IMAGE OF OBJECT        │
            └────────────────────────┘
                         │
                         ▼
            ┌────────────────────────┐
            │ EXTRACT, AREA, MIN & MAX│
            │ RADIUS & PERIMETER     │
            │ (FEATURES)             │
            └────────────────────────┘
                         │
                         ▼
            ┌────────────────────────┐
            │ COMPARE EXTRACTED      │
            │ FEATURES WITH THOSE    │
            │ IN DATA BASE           │
            └────────────────────────┘
                         │
                         ▼
                    ╱ NUMBER ╲
          NONE     ╱  OF CLOSE ╲    MORE THAN ONE
        ◄─────────◄   MATCHES   ►─────────►
                    ╲          ╱
                     ╲        ╱
                         │ ONE
```

NONE → DISPLAY ERROR MESSAGE → RETURN

MORE THAN ONE → CROSS CORRELATE LINE STORED IN DATA BASE FOR EACH MATCH WITH LINE IN IMAGE. COMPUTE OFFSETS AND CLOSENESS OF MATCH

ONE → AUTO CORRELATE LINE STORED IN DATA BASE WITH CORRESPONDING LINE IN THE IMAGE. COMPUTE OFFSET.

MORE THAN ONE CLOSE MATCH — NO → (A) ; YES → DISPLAY ERROR MESSAGE → RETURN

(A)

Fig. 2

0081322

A

ROTATE TABLE BY AMOUNT
INDICATED BY OFFSET

OBTAIN IMAGE COVERING
30° SECTOR ONLY

AUTO CORRELATE LINE
STORED IN DATA BASE
WITH CORRESPONDING
LINE IN THE IMAGE.
COMPUTE OFFSET.

COMPUTE OFFSET FROM
PREFERRED ORIENTATION
AND ROTATE PART

SIGNAL PART
ORIENTATED

Fig. 3

RETURN

0081322

*Fig. 4*

TEACH MODE

MODE SELECTED ? → RUN MODE → RETURN

NEW SAMPLE

GET PART NUMBER

PART TAUGHT BEFORE ?

YES → OBTAIN 360° IMAGE. EXTRACT FEATURES (AREA, RADIUS)

ROTATE TO POSITION FOR FINE IMAGE AND TAKE 30° IMAGE

NO → OBTAIN 360° IMAGE. EXTRACT FEATURES.

ASK FOR A LINE TO USE FOR RADIAL CORRELATION

DID FEATURES MATCH AN OBJECT IN DATA BANK ?

YES → DIFF. ON CROSS CORRELATION ?

NO →

DIFF. ON CROSS CORRELATION ? YES →

ERROR MESSAGE

ASK FOR AREA OF FINE DETAIL. ROTATE TO START OF AREA

GET FINE IMAGE, AND CORRELATION DETAIL LINE

B    C    B

0081322

Fig. 5